## Europäisches Patentamt

## European Patent Office

## Office européen des brevets

(11) Publication number: **0 131 450**
**B1**

(12) **EUROPEAN PATENT SPECIFICATION**

(45) Date of publication of patent specification: **23.01.91**

(51) Int. Cl.⁵: **B 60 R 16/02, H 04 J 14/00**

(21) Application number: **84304633.5**

(22) Date of filing: **06.07.84**

(54) Automotive multiplex system.

(30) Priority: **09.07.83 GB 8318633**

(43) Date of publication of application:
**16.01.85 Bulletin 85/03**

(45) Publication of the grant of the patent:
**23.01.91 Bulletin 91/04**

(84) Designated Contracting States:
**DE FR GB**

(56) References cited:
**EP-A-0 023 105**
**DE-A-3 147 550**
**DE-A-3 222 570**
**FR-A-2 473 823**
**GB-A-2 094 087**
**US-A-3 883 217**
**US-A-4 002 845**

**FREQUENZ, vol. 31, no. 12, 1977, pages 364-368, Berlin, DE; K. ERDEL et al.: "Glasfaser-Bussysteme zur Signalübertragung in Bordnetzen"**

(73) Proprietor: **LUCAS INDUSTRIES public limited company**
**Great King Street**
**Birmingham, B19 2XF West Midlands (GB)**

(72) Inventor: **Chana, Rawinder Singh**
**18 Wootton Close Saxon Hall**
**Luton Bedfordshire (GB)**
Inventor: **Duesbury, Paul Geoffrey**
**126 Rowood Drive Solihull**
**West Midlands (GB)**

(74) Representative: **Prutton, Roger et al**
**MARKS & CLERK Alpha Tower Suffolk Street Queensway**
**Birmingham B1 1TT (GB)**

(56) References cited:

**EDN, vol. 25, no. 20, 5th November 1980, pages 79,81, Boston, US; T. ORMOND: "Fiber-optics/microcomputer combination replaces automotive wiring harnesses"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to an automotive multiplex wiring system.

The requirement to provide increased electrical system functions in a road vehicle but at the same time to reduce the size, weight, complexity and cost of vehicle wiring has led to the development of vehicle multiplex wiring systems. The majority of the systems use electrical wiring as the transmission medium. A few of the systems use optical fibres as a transmission medium, the use of optical fibres providing the advantages of immunity from electromagnetic radiation and electrical isolation. One arrangment which uses optical fibres comprises a central active unit which is connected to each individual station by a pair of optical fibres. The central unit includes a separate transmitter and a receiving element for each individual station and is arranged to receive data from the individual stations and then to retransmit this data back to the other stations. This system suffers from a number of disadvantages. The need to provide a central active unit having a separate transmitting and receiving element for each individual station results in a system which is both complex and costly. Furthermore, as all data must be relayed via the central unit this causes a delay in transmitting data which may not always be tolerable in an automotive application. Also, this system suffers from the disadvantage that failure in the central active unit will cause failure of the entire system.

"Frequency" (volume 31, no 12, 1977, pages 364—368, Berlin) discloses an automotive multiplex system having a plurality of individual stations, each of which includes an optical interface. Each optical interface is connected to one end of an optical guide whose other end is connected to a common passive optical mixer so as to interconnect the individual stations.

According to the invention, there is provided an automotive multiplex system comprising a plurality of individual stations each of which includes an optical interface, a set of optical guides each of which is connected at one end to the optical interface of a respective individual station, and a passive optical mixer connected to the other ends of the optical guides thereby providing an interconnection between the individual stations, characterized in that the system further comprises a set of power lines each of which is connected to the power input of a respective individual station and is combined with its associated optical guide to form a ribbon cable.

Interconnection is thus achieved in a particularly simple manner.

In the present invention, there must clearly be some order in which the individual stations make their transmissions. However, if one station fails to transmit this may lead to problems. In order to avoid such problems, each station may include means for causing the stations to transmit in a predetermined order, and means for causing the next station to transmit in the event of one station failing to transmit. Each station may further include means for preventing the station from transmitting more than a predetermined number of times without receiving data.

In a preferred arrangement of the present invention, the system includes a set of fuses positioned beside the optical mixer, and each of the set of power lines is connected between the set of fuses and the power input of the respective individual station.

Conveniently, each optical interface includes optical receiving means and optical transmitting means and each optical guide comprises at least one optical fiber or at least one bundle of optical fibres.

Conveniently, each optical guide comprises a pair of optical fibres or a pair of bundles of optical fibres, one fibre or bundle being associated with the receiving means and the other fibre or bundle being associated with the transmitting means.

As the present system is designed for use in road vehicles, there is likely to be a high degree of variation of received signal strength between the individual stations. Therefore, it is important that the signals processing of the receiving signals in the individual stations has a high degree of immunity from noise whilst maintaining high sensitivity to valid signals of low amplitude.

Preferably, each station includes means for processing receiving optical signals, said processing means being provided with hysteresis.

Preferably, the effect of hysteresis reduces with increasing frequency.

By providing the processing means with hysteresis, a high degree of immunity from noise may be achieved. At the same time, by reducing the effect of hysteresis with increasing frequency, distortion of pulse duration is substantially reduced. Also, when the power of the received signals is at a very low level, there may be an intolerably high error rate in receiving the signals and it is clearly important for this to be indicated. By providing hysteresis, the processing means will not respond to received signals of very low power and will thereby provide the desired indication.

When a station is transmitting, it is clearly essential for the station to provide a synchronising pulse. If the synchronising pulse is provided at the beginning of transmission, this may lead to problems in the other stations as the initial pulse would be liable to erroneous reception.

In order to overcome this problem, each station may be arranged to transmit optical data in accordance with a predetermined format, said format comprising an initial set of data bits, a synchronisation pulse, and one or more further sets of data bits.

Said format may include a second synchronisation pulse following said one or further sets of data bits. In order to permit easy distinction between the first and second synchronisation pulses, the first and second synchronisation pulses may be opposite logic levels.

Each set of data bis may terminate with a parity bit, the parity bit serving both as a check on the parity of data in the preceding data bits and to adjust the logic level of the optical signal to the correct level for the succeeding data bits or synchronisation pulse.

The initial data bits may commence with one or more bits of predetermined data, said predetermined data being identical for each station.

Each station may include means for verifying the received optical signal by examining the predetermined data bits.

This invention will now be described in more detail by way of example, with reference to the accompanying drawings in which:

Figure 1 shows a general arrangement of an automotive multiplex wiring system embodying this invention;

Figures 2a, 2b, 2c and 2d illustrate the format used to transmit signals in the arrangement of Figure 1;

Figure 3 is a circuit diagram of the optical interface and microcomputer provided in each station of the arrangement shown in Figure 1;

Figure 4 is a circuit diagram of an input/output matrix used in each station of Figure 1;

Figure 5 is block diagram showing the overall program structure used to control the computer shown in Figure 3; and

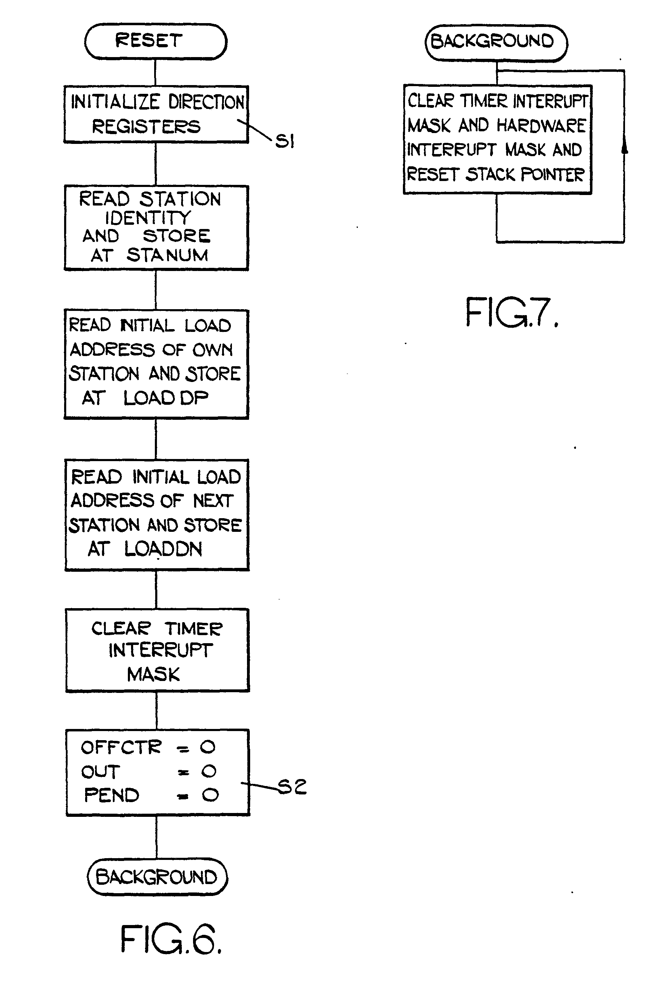

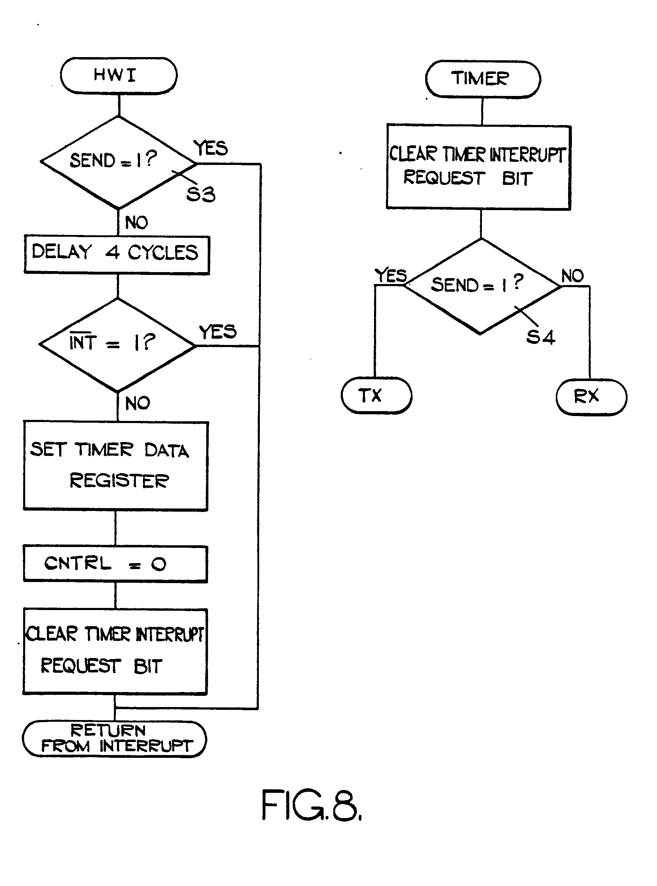

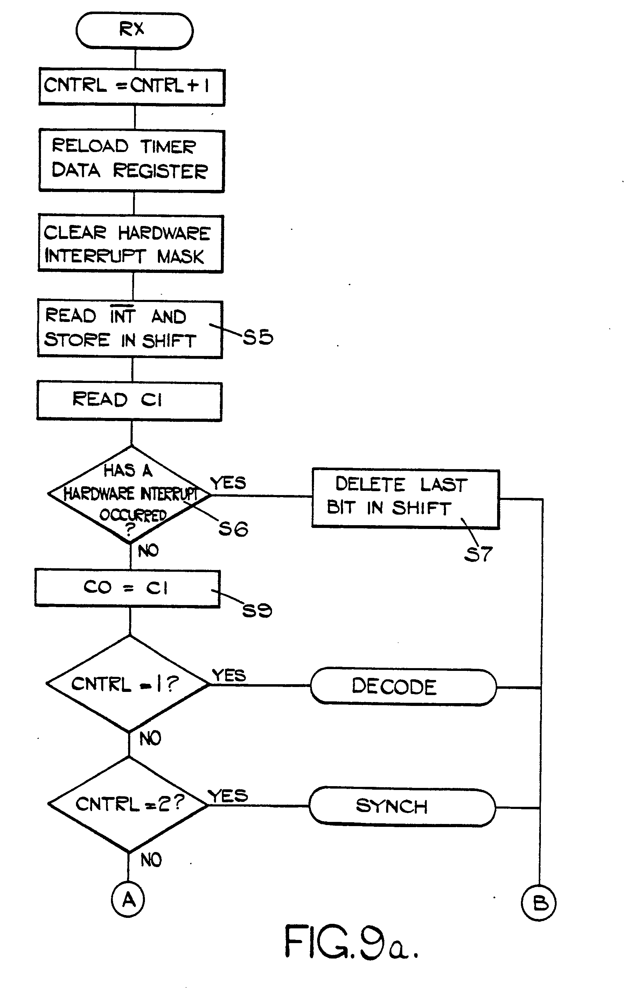

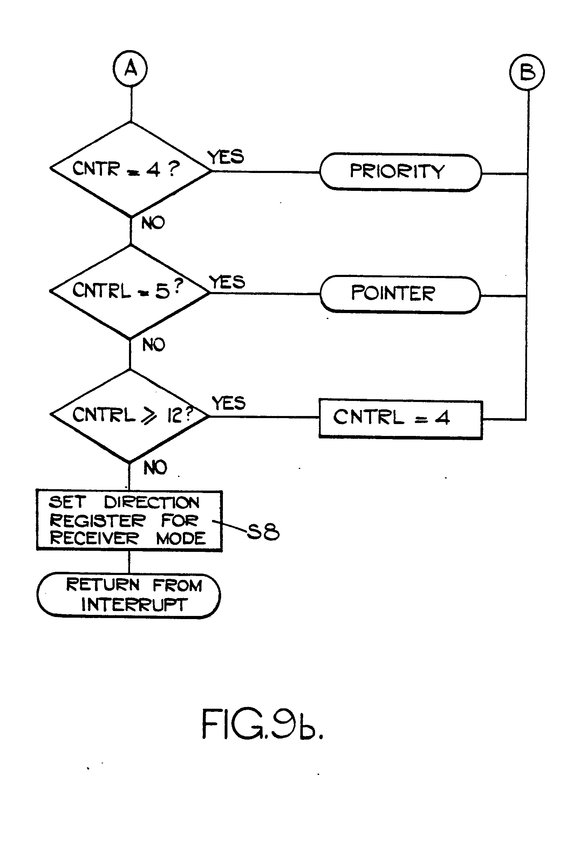

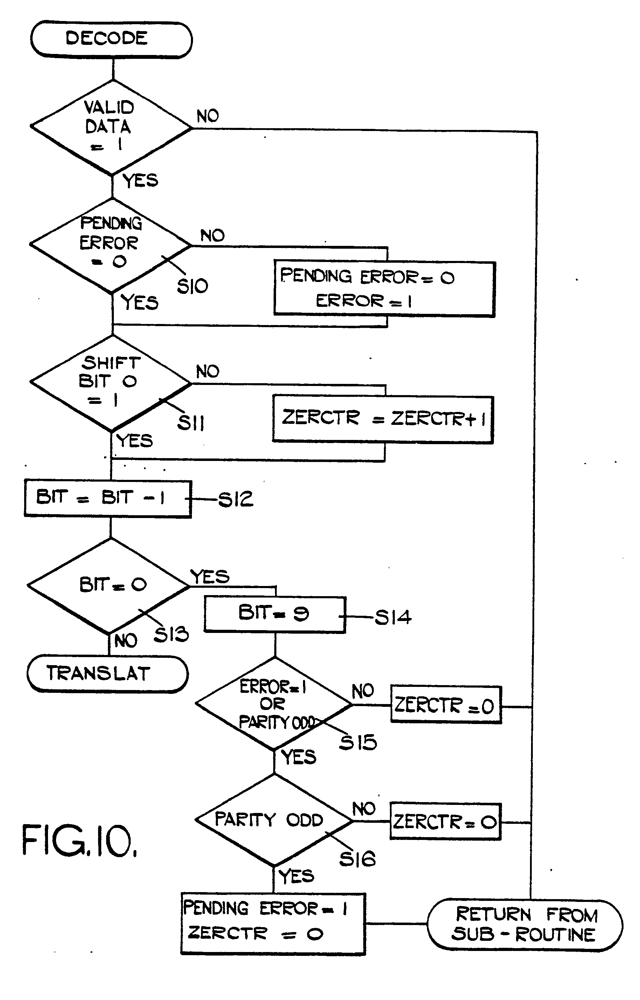

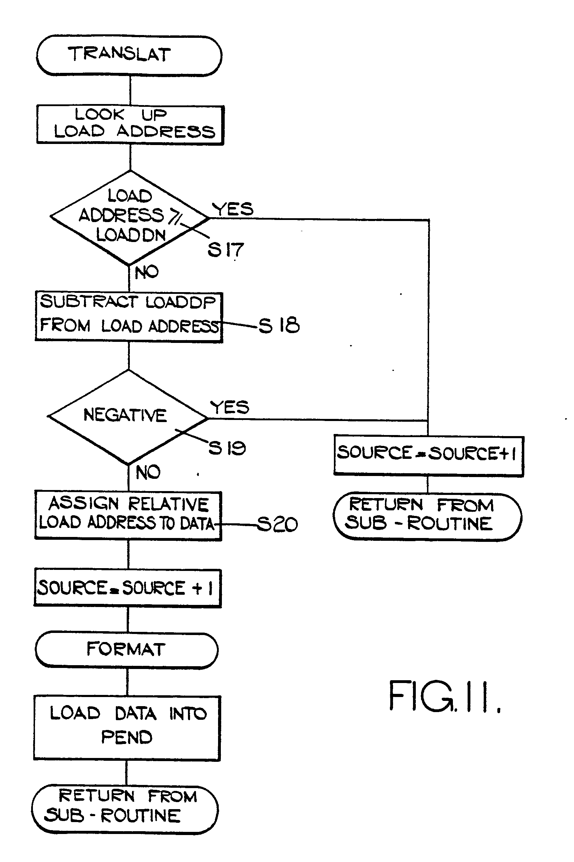

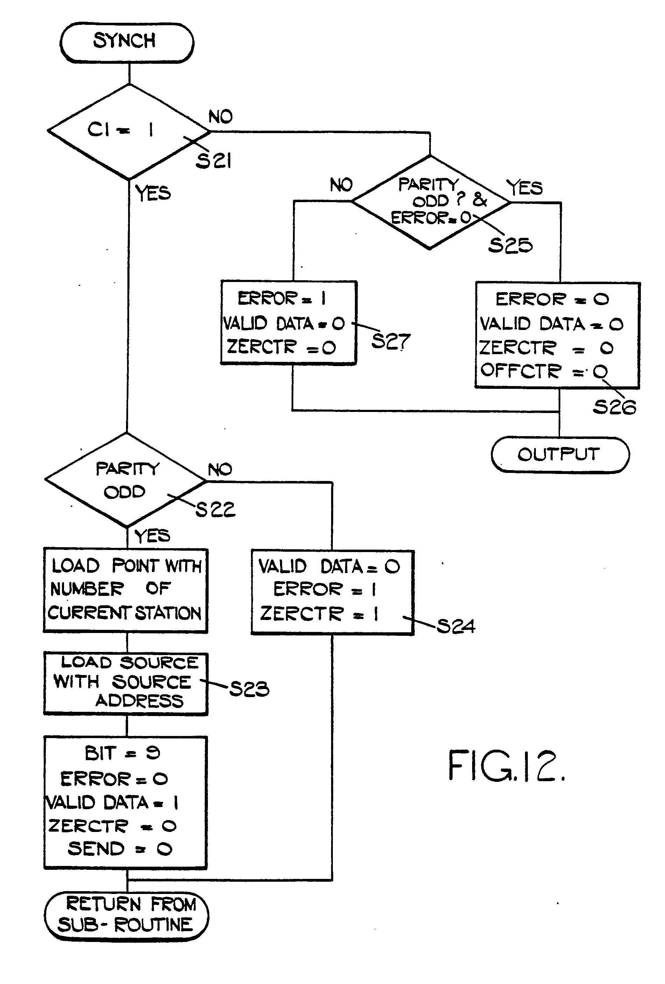

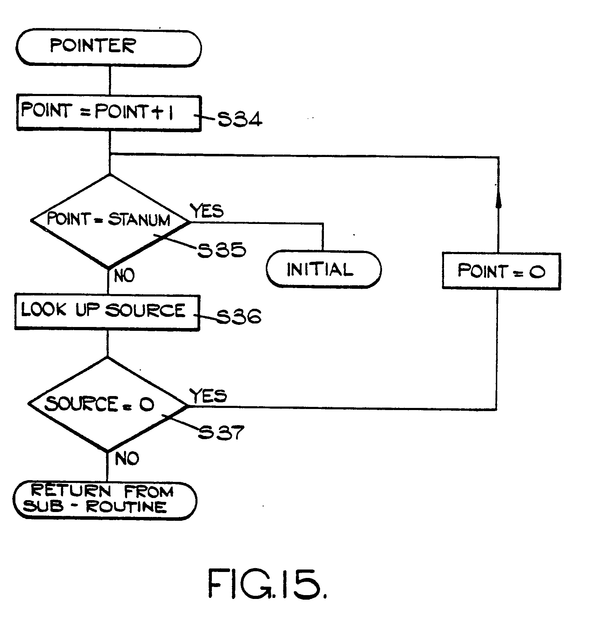

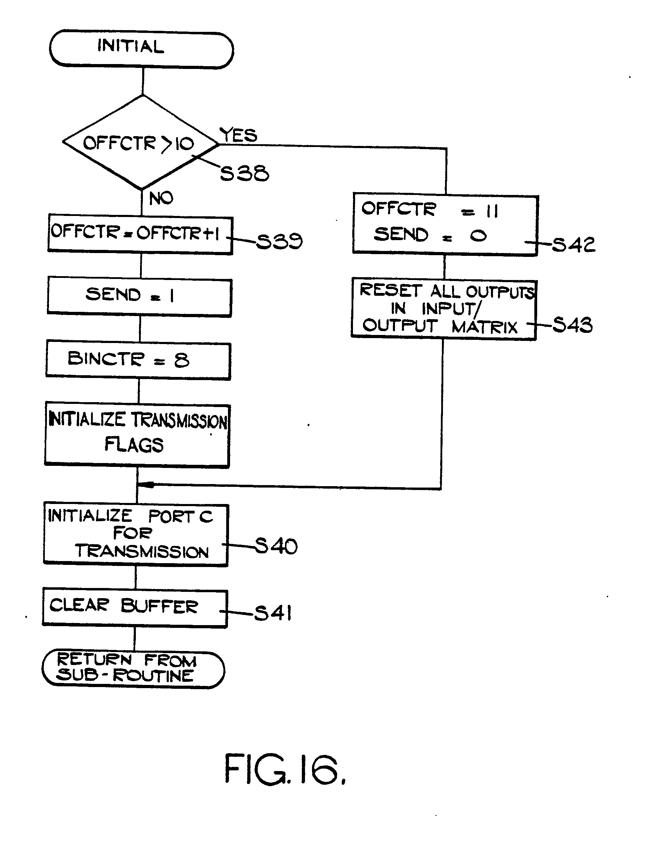

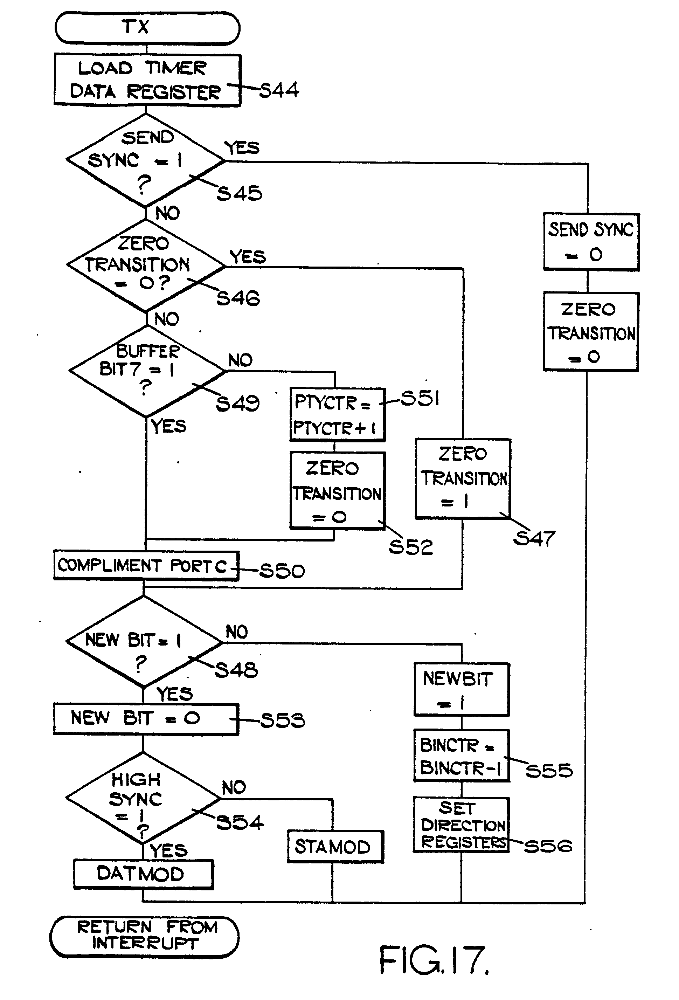

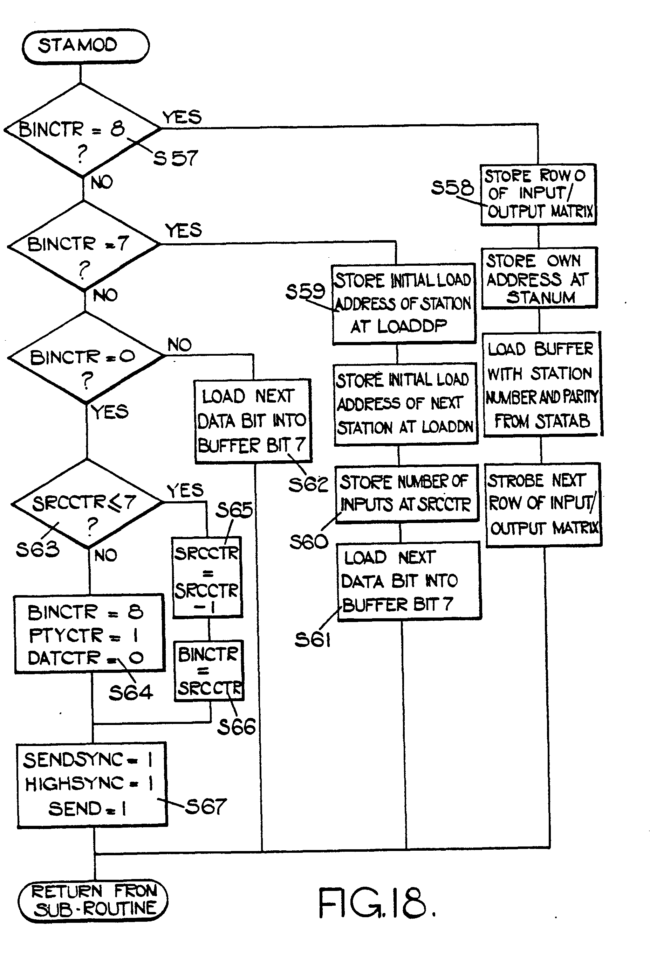

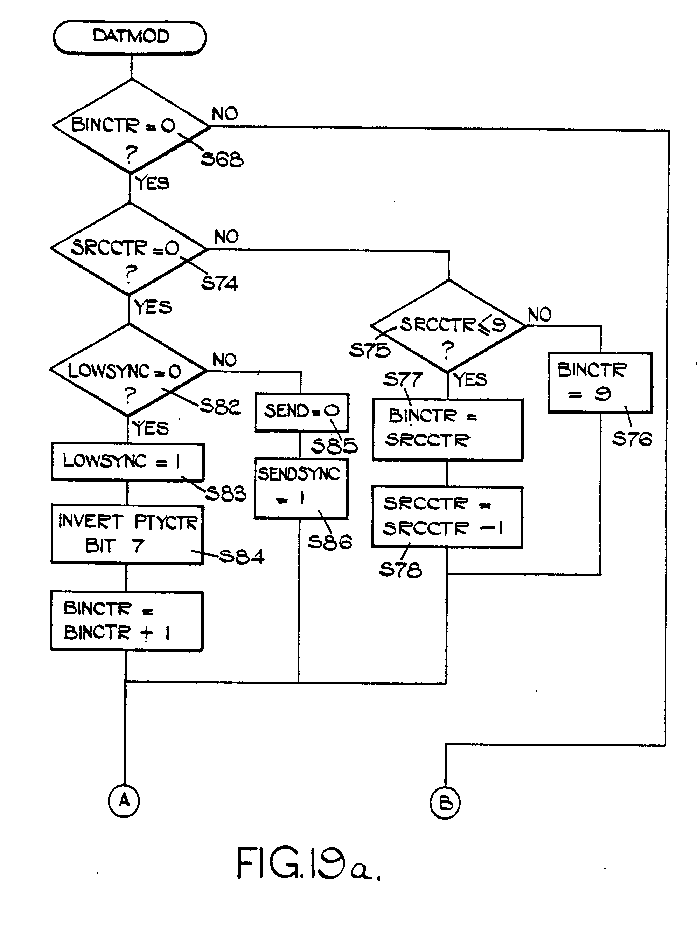

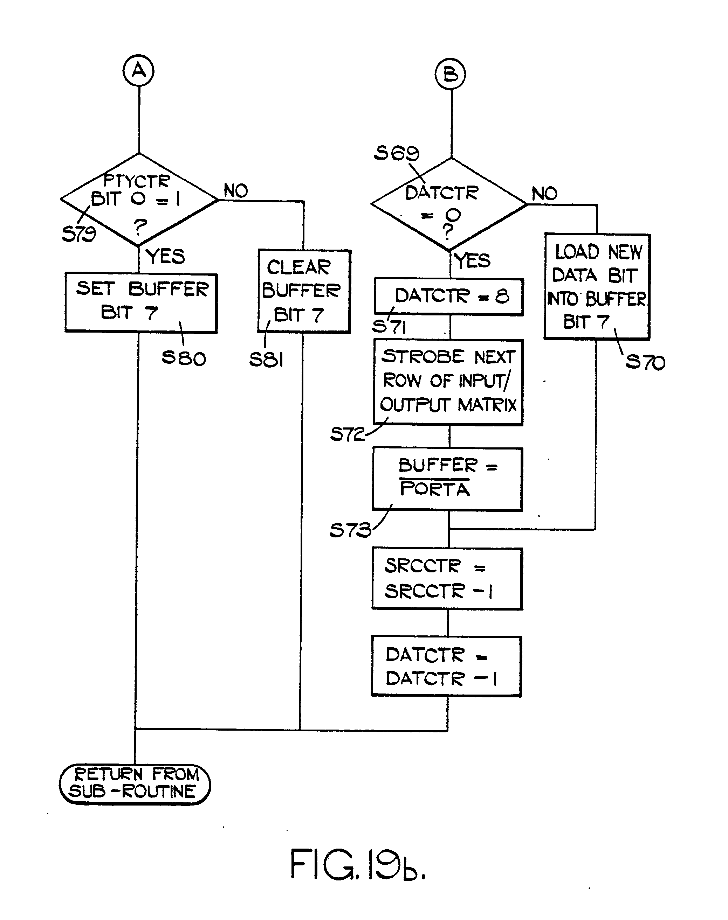

Figures 6 to 19 are flow charts of the individual programs.

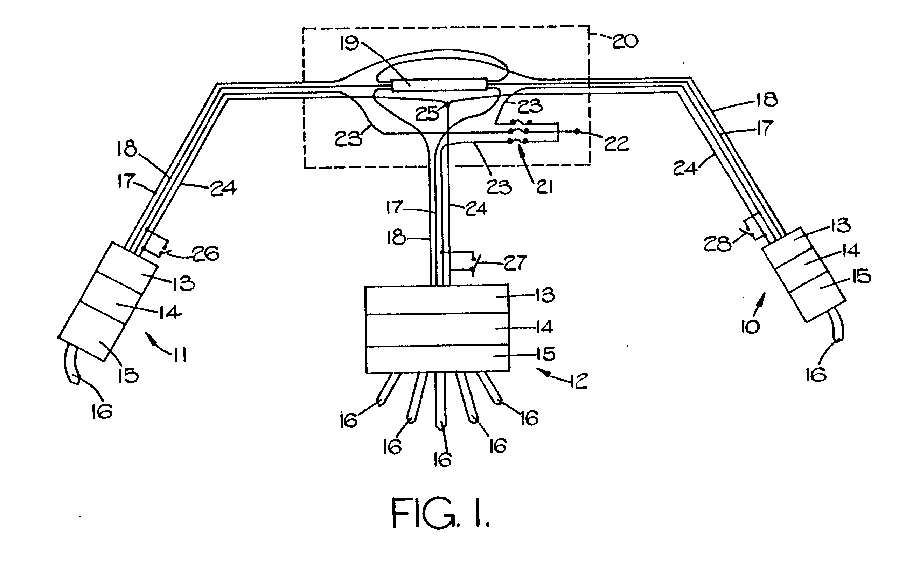

Referring now to Figure 1, there is shown the overall arrangement of a multiplex wiring system for handling data concerned with control functions related to the front doors of a passenger vehicle. Although the present invention will be described with reference to this particular system, it is to be appreciated that the present invention may be used to control other or further functions and that the particular example has been selected only for purposes of illustration.

The system shown in Figure 1 comprises a station 10 positioned in the driver's door, a station 11 positioned in the front passenger door, and a station 12 positioned in the central console. Each of these stations comprises an optical interface 13, a microcomputer 14, and an input/output matrix 15. The input/output matrix 15 receives input signals. For example, in the case of the station 10 these signals will be derived from switches for operating the vehicle windows, the position of mirrors located on both the driver's door and the passenger door, the positions of the driver's seat, and various lights inside the vehicle. In the case of the station 11, the input signals will be derived from switches for operating the window on the passenger door, and the position of the passenger seat. In both the stations 10 and 11, input signals are also received from a switch associated with the door lock for controlling locking of all doors in the vehicle. Each input/output matrix also provides output signals and these are indicated by the arrows 16. In the case of stations 10 and 11, the output signals will control functions such as the position of the wondows, the position of the mirrors mounted on the doors, and the operation of the door locks. In the case of station 12 positioned in the central console, the output signals will control the position of the front seats, position of the windows in rear doors, the locks mounted in the rear doors and in the tail gate, and various lights in the vehicle.

Each optical interface 13 transmits optical data signals through a 1 mm plastic optical fibre 17 to a passive optical mixer 19 and receives optical signals from the optical mixer 19 through a 1 mm plastic optical fibre 18. The optical fibres 17 and 18 associated with each interface thus operate as an optical guide. The passive optical mixer 19 comprises a 30 mm long rod of 3 mm diameter plastic fibre, and the fibres 17 are connected to one end of this rod whilst the fibres 18 are connected to the other end. The mixer 19 is positioned inside a junction box 20 which also houses a set of power fuses 21. One end of the fuses 21 is connected to a positive terminal 22 and the other end of each fuse is connected to a power line 23 which is connected to the power input of an associated station. Each of the power lines 23 is associated with a rail 24 which supplies the logic circuitry of its associated station. The rails 24 are connected at a junction point 25. The two plastic fibres 17 and 18 and the two electrical rails 23 and 24 which extend between the junction box 20 and a particular station are combined to form a four core ribbon cable. Thus, the wiring between the junction box 20 and the individual stations and also the fusing of the power supply to the individual stations is achieved in a particularly simple manner.

Although in the present arrangement each station is associated with a pair of fibres, it is envisaged that the pair of fibres may be replaced by a single fibre. In this case, the mixer 19 would take the form of an optical block provided with a mirror on one face with the optical fibres being connected to the block on a face which opposes the mirror. Moreover, each optical fibre may be replaced with a bundle of fibres.

Although the rails 23 are permanently energised, the rails 24 receive power from the rails 23 only upon closure of one of three switches 26, 27 and 28. When one of these switches is closed, the signal supplied to the logic circuitry of each station causes the station to be reset and initialized. The switches 26 and 28 are operated upon insertion of a key into the lock of the associated door and the switch 27 is closed upon operation of the vehicle ignition switch. Thus, the system is brought into operation either by inserting a key into one of the front door locks or by operating the ignition switch.

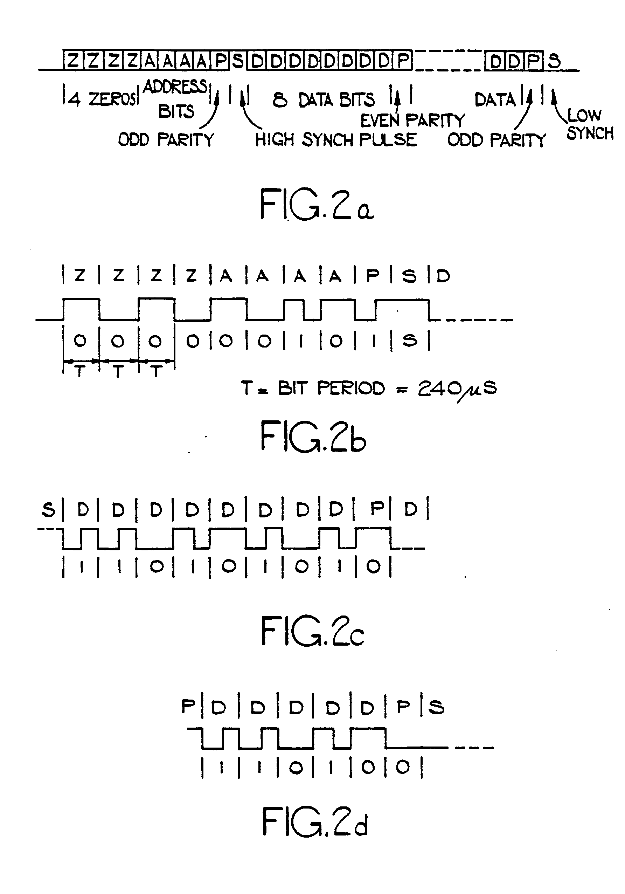

Each station in turn makes a transmission of data bits in accordance with a fixed format. This format is illustrated in Figures 2a to 2d. The transmission is made by using a light emitting diode which is operated on an ON/OFF basis with ON corresponding to a high logical level and OFF corresponding to a low logical level. The data is biphase encoded so that one logic level transition in a data bit corresponds to logic "0" and two level transitions correspond to logic "1". As shown in Figure 2a, each transmission commences with four zeros Z and these are followed by four address bits D which identify the station. The address bits are followed by a single odd parity bit P and this is followed by high synchronisation pulse S. The high synchronisation pulse is followed by one or more sets of data bits. Each set of data bits except for the last set comprises eight data bits D followed by an even parity bit P. The number of data bits in the last set is determined by the requirement of the particular station and the data bits are followed by an odd parity bit D. All parity bits are with respect to zero. After this odd parity bit, the light emitting diode is turned off thereby providing a low synchronisation pulse S. The first four zeros and the address bits and a high synchronisation pulse are illustrated in more detail in Figure 2b, the subsequent set of data bits are shown in more detail in Figure 2c, and the final set of data bits and the low synchronisation pulse are shown in Figure 2d.

By positioning the high sychronisation pulse after the initial zeros and address bits, it is ensured that this pulse will be received reliably. If this pulse were positioned at the beginning of the transmission, there would be a danger that it would be received unreliably as the initial bit or bits of a transmission are particularly prone to corruption. The synchronisation pulse also serves to inform each station that it must change from a mode in which it is identifying the transmission station to a mode in which is decodes the data bits. By making the initial sychronisation pulse high an the final sychronisation pulse low, the arrangement required to distinguish between these two sychronisation pulses may be made particularly simple. If both sychronisation pulses were high but of different duration, it would be necessary to provide very accurate timing circuitry in each station to distinguish between them. The four zeros at the beginning of each transmission gives each station an opportunity to adjust to the power level of the received signal. Also, the initial zeros are tested and, if they are not correctly received, the data in the subsequent transmission is not used.

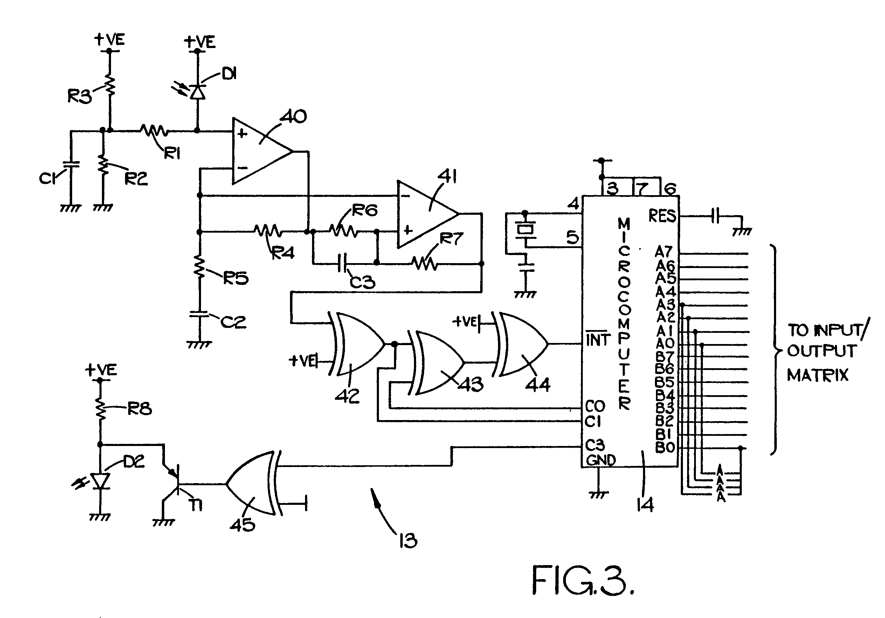

The optical interface 13 and the microcomputer 14 in each station is identical and their circuit diagram is given in Figure 3. The received optical signals are detected by PIN photodiode $D_1$, the cathode of which is connected to the positive power rail and the anode of which is connected to the non-inverting input of a type CA3140 operational amplifier 40. The anode of this diode is also connected through a 1 megohm resistor $R_1$ and a 51 kilohm resistor $R_2$ to earch. Resistor $R_2$ is bridged by 0.1 microfarad capacitor $C_1$ and the junction of resistors $R_1$ and $R_2$ is connected to the positive supply rail by a 100 kilohm resistor $R_3$. Resistors $R_2$ and $R_3$ and capacitors $C_1$ serve to provide a bias for diode $D_1$ and the resistor $R_1$ converts the current from diode $D_1$ to a voltage. The output of amplifier 40 is connected through a 100 kilohm resistor $R_4$, a 10 kilohm resistor $R_5$ and a 0.1 microfarad capacitor $C_2$ to earth and the junction of resistors $R_4$ and $R_5$ is connected to the inverting input of amplifier 40. Resistors $R_4$ and $R_5$ provide amplifier 40 with the desired amplification and capacitor $C_2$ provide a bias voltage for eliminating the DC component from the input signal and for making the amplifier substantially insensitive to the effect of temperature variation on diode $D_1$. The output of amplifier 40 is connected through a 100 kilohm resistor $R_6$ to the non-inverting input of another type CA3140 operational amplifier 41. Resistor $R_6$ is bridged by a 15 nanofarad capacitor $C_3$ and the output of amplifier 41 is connected to the non-inverting input through a 5 megohm resistor $R_7$. The inverting input of amplifier 41 is connected to the junction of resistors $R_4$ and $R_5$. Resistors $R_6$ and $R_7$ provide hysteresis for amplifier 41, thereby providing this amplifier with a high degree of immunity from thermal and electrical noise and ensuring that no output is provided when there are no optical signals being transmitted. Capacitor $C_3$ reduces this hysteresis at higher frequencies such as are experienced during data transmission and thereby prevents the hysteresis caused by resistors $R_6$ and $R_7$ from causing any appreciable distortion in pulse duration. By connecting the junction of resistors $R_4$ and $R_5$ to the inverting input of amplifier 41, the bias voltage for this amplifier is supplied directly from the bias voltage for amplifier 40. Consequently, the output of amplifier 40 is connected directly to the input of amplifier 41 without a component such as a capacitor which would cause a time delay and which might cause severe corruption to the input signal to amplifier 41. It is to be appreciated that amplifier 40 thus operates as an AC amplifier whilst amplifier 41 operates as a DC amplifier with high gain. The high gain of amplifier 41 provides the overall arrangement of amplifiers 40 and 41 with a very high dynamic range.

For best results, the time constant of resistor $R_6$ and capacitor $C_3$ and resistor $R_5$ and capacitor $C_2$ should be approximately equal. If the time constant of resistor $R_6$ and capacitor $C_3$ were too long, the effectiveness of hysteresis would be reduced whilst if the time constant were too short it would have the effect of reducing overall sensitivity. Also, in order to permit the amplifiers 40 and 41 to adjust quickly to the signal level of each data transmission, the time constant should be relatively short and should be chosen to correspond to 1.5 bit periods.

Although in the arrangement described above, the hysteresis is achieved with resistors $R_6$ and $R_7$ and capacitor $C_3$, other arrangements are possible. For example, digital electronics may be used and, if desired, the hysteresis may be achieved by using software.

Also, although amplifier 40 and 41 provide two stage processing of the receiving optical signals, other arrangements are envisaged. For example, a third stage may be provided to increase the gain still further.

Thus, during reception of optical signals, at the output of amplifier 41 there appear pulse trains as shown in Figures 2b, 2c and 2d.

The output of amplifier 41 is connected to one input of an exclusive NOR gate 42, the other output of which is connected to the positive supply rail. The output of NOR gate 42 is connected to one input of an exclusive NOR gate 43, the output of which is connected to one input of a further exclusive NOR gate 44. The other input of gate 44 is connected to the positive supply rail. The output of gate 44 is connected to the interrupt pin $\overline{\text{INT}}$ of microcomputer 14. Microcomputer 14 takes the form of a Motorola type MC68705P3 microcomputer. The program for controlling this computer is stored in its read-only memory and this program will be described in due course. Pin $C_0$ of port C of microcomputer 14 is connected to the other input of NOR gate 43 and pin $C_1$ is connected to the output of NOR gate 42.

In operation, three quarters of the way through each bit period the level of the output signal of gate 42 is read using pin $C_1$ and pin $C_0$ is then set to this level. Consequently, the level transition at the beginning of the next bit period causes the signal supply to the interrupt pin $\overline{\text{INT}}$ to go low and this causes a hardware interrupt in microcomputer 14. Also, the level of the signal at the interrupt pin $\overline{\text{INT}}$ three quarters of the way through each bit period will be high when a logic 1 is being transmitted and low when a logic 0 is being transmitted and so may be used to decode the optical signals.

Pin $C_3$ is used during data transmission and this pin is connected to one input of an exclusive NOR gate 45 the other input of which is connected to the positive supply rail. The output of gate 45 is connected to the base of a PNP transistor $T_1$, the collector of which is connected to earth and the emitter of which is connected through a resistor $R_8$ to the positive supply rail. The emitter of transistor T1 is also connected to the anode of a 670 nm high brightnesss light emitting diode $D_2$, the cathode of which is connected to earth. The diode $D_2$ is decapped and brought into very close contact with its associated optical fibre. In operation, when the output signal of pin $C_3$ is high, diode $D_2$ is energised thereby transmitting light into its optical fibre and when the output of this pin is low diode $D_2$ is de-energised.

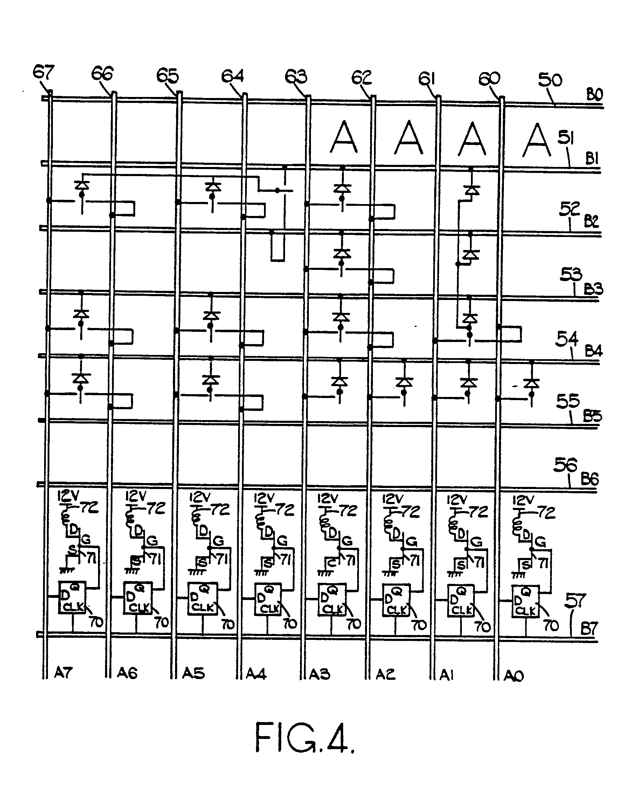

Ports A and B of microcomputer 14 are connected to the intput/output matrix shown in Figure 4. In particular, pins $B_0$ to $B_7$ are connected to rails 50 to 57 of the matrix, these rails respectively defining rows 0 to 7, and pins $A_0$ to $A_7$ are connected to rails 60 to 67, these rails respectively defining columns 0 to 7. Each cross-point of the matrix which is used defines either an input to the microcomputer from the matrix or an output from the computer to the matrix. In each matrix, row 0, columns 7 to 4 are not used for convenience. Consequently, no connections are made between the rows and the columns for these four intersections. Also, in each matrix row 0, columns 3 to 0 provide data which represents the identity of the station in which they are located. In Figures 3 and 4 these cross-points are denoted by reference letter A. To achieve this, diodes are connected between the columns and rows with the anodes of the diodes being connected to the columns and the cathodes being connected to the rows so as to provide the correct identity.

In each matrix, row 1, columns 7 to 0 are used to provide inputs to the microcomputer for control functions which occur only at their own station. Such inputs will be referred to below as local inputs. In puts which provide data to be transmitted to other stations commence at row 2, column 7 and continue through the remaining columns and rows as far as may be required. These inputs will be referred to below as transmitting inputs. Each input is achieved by connecting the respective column through a switch to the anode of a diode, the cathode of which is connected to the respective row. Additional wiring may be provided to as to combine inputs in any logical manner which may be desired.

At each intersection which represents an output, the column is connected to the D input of a D-type flip flop and the row is connected to its clock input. The Q output of the flip flop is connected to the gate of an FET transistor, the source of which is connected to earth and the drain of which is connected through a relay coil to a 12V rail. The relay controls one or more power switches which provide the desired output control signals. In the example shown in Figure 4, such outputs occur in row 7, columns 7 to 0. The flip flops, transistors and relay coils are respectively denoted by reference numerals 70, 71 and 72.

In operation, the inputs are read by strobing each row in turn with a low signal and the data is read by port A of the microcomputer 14. Consequently, the data is received in inverted form and, as will be explained below, it is complemented before being used. Data is transmitted to the input/output matrix by strobing each row in which outputs are present and supplying the data via port A of the microcomputer.

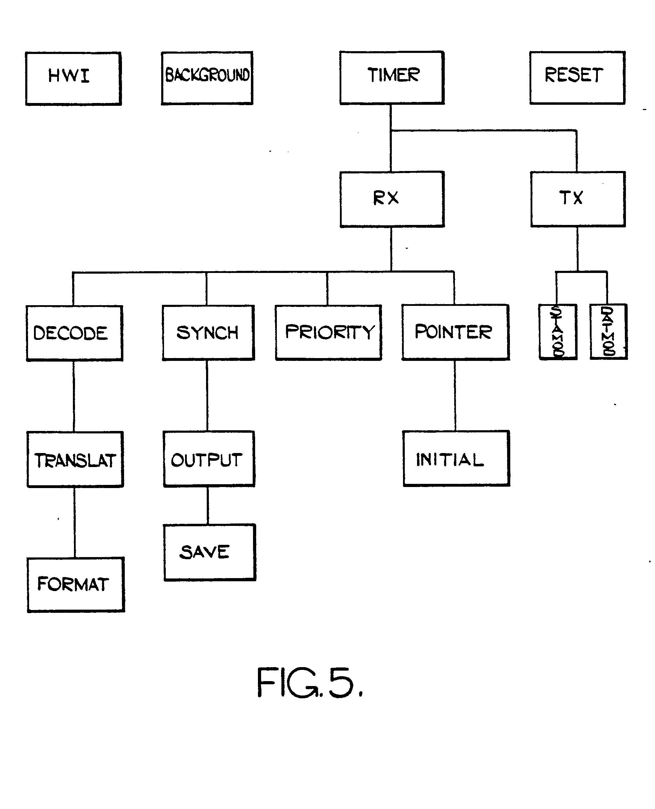

Each microcomputer 14 is identically programmed. Consequently, if a microcomputer fails it may be replaced with a spare microcomputer or, alternatively, with a microcomputer from a less important station. The overall program structure for the microcomputer is shown in Figure 5.

Referring now to Figure 5, when the system is initially energised program flow enters a program RESET. This program calls a program BACKGROUND. The overall program includes two interrupt programs HWI and TIMER. The program HWI is entered when the signal on pin $\overline{\text{INT}}$ goes low. The microcomputer has an internal timer having a data register which is continuously decremented by the internal clock. When the data register reaches 0, as timer interrupt occurs and the program TIMER is entered. If a microcomputer is operating in a data receiving mode, program flow passes from the program TIMER to a program RX. If it is operating in a data transmitting mode, then the program flow passes to a program TX. The program RX can call one of four sub-routines DECODE, SYNCH, PRIORITY and POINTER. The sub-routine DECODE operates on each data or parity bit as it is received and calls further sub-routines TRANSLAT and FORMAT. The sub-routine SYNCH performs certain operations upon detection of the high or low synchronisation pulse. This sub-routine calls further sub-routines OUTPUT and SAVE. The sub-routine PRIORITY is a dummy sub-routine in the present program. However, if the present invention is used in a system in which it is desired to give priority to a particular input, this sub-routine may be used to make the station jump into the transmitting mode upon operation of such an input. The sub-routine POINTER checks to see if the station is the next station to transmit and, if it is, a sub-routine INITIAL is called which prepares the station for transmission. The program TX is responsible for data transmission and controls the transmitting output signals of port C. This program calls a sub-routine STAMOD which provides the date bits prior to the high synchronisation pulse and a sub-routine DATMOD which provides the subsequent data bits.

The overall program includes four lock-up tables SRCTAB, LDTAB, STATAB, and MAP. Each input in each input/output matrix is assigned an address which will be referred to below as a source address. The input of row 2, column 7 of the first station is assigned address $0_1$ and the remaining inputs of this station and then the inputs of the remaining stations are assigned addresses in ascending order. A dummy address is included at the end of each station. The source address of the first input of each station is stored in the table SRCTAB. Each output of each input/output matrix is also assigned an address and these addresses will be referred to below as load addresses. Load addresses commence with address $0_1$ for the output located at row 7, column 0 of the first station and the numbering then continues row by row and station by station. The load address of the first output of each station is stored in the table LDTAB. The load address or addresses associated with each source address are stored in the table MAP. In the table STATAB, the address of each station together with the correct parity bit is stored as a function of station address.

The individual programs will now be descibed in more detail.

After entering the program RESET, in a step $S_1$ the direction registers are initialized, the station then reads its own address from its own input/output matrix and stores this at location STANUM. The initial load address of the present station and also the load addresses of the next station are read and stored at locations LOADDP and LOADDN. The timer interrupt mask is then cleared and lastly, in a step $S_2$, counter OFFCTR is cleared and software matrixes OUT and PEND are set to zero. The matrix PEND is used to store data as it is being received during each transmission and the matrix OUT is used to store data at the end of each transmission. Prgram flow then passes to the program BACKGROUND in which the timer interrupt and the hardware interrupt masks are continuously cleared. These masks are cleared continuously to prevent them from being set by noise hits which may easily occur in an automotive environment. Throughout the overall program, it will be observed that various registers are set to desired values more often than may appear necessary and the reason for this is also as a precaution against the possibility of noise hits.

After entering the program HWI, a flag SEND is examined in a step $S_3$. This flag is set during the transmission mode. If it is set, a return from interrupt is performed. If it is not set, after a delay of four cycles the pin $\overline{INT}$ is examined. The purpose of this is to check that this interrupt was not caused by noise. If the pin $\overline{INT}$ is high, a return from interrupt is performed. If it is low, the timer data register is set so as to cause a timer interrupt three quarters of the way through the bit period. A counter CNTRL is then set to zero. The counter CNTRL controls program flow through the program RX. Lastly, the timer interrupt request bit is cleared before performing a return from interrupt.

After entering the program TIMER, the timer interrupt request bit is cleared and then, in a step $S_4$, the flag SEND is examined. If it is set, program flow passes to the program TX and if it is clear the program flow passes to the program RX.

After entering the program RX, the counter CNTRL is incremented. The timer data register is then set so that the next timer interrupt will occur after the lapse of a further three quarters of a bit period. Providing a data or parity bit is subsequently transmitted, the next interrupt will in fact be a hardware interrupt. The purpose of setting the timer data register at this stage is to detect either a high or a low synchronisation pulse. Then, the hardware interrupt mask is cleared as it is important to determine if a hardware interrupt has occured during execution of the program RX. In a step $S_5$, the pin $\overline{INT}$ is read, a register SHIFT is rotated one bit to the left and a new data bit is stored on bit 0 of this register. Next, the pin $C_1$ is read and then, in a step $S_6$, a test is made to determine if a hardware interrupt has occurred. If such an interrupt has occurred, the data stored in the step $S_5$ is unreliable and so, in a step $S_7$ this bit is deleted. After performing step $S_7$, program flow jumps to a step $S_8$ in which the direction registers are set for the receiving mode before performing a return from interrupt. If a hardware interrupt has not occurred, in a step $S_9$ pin $C_0$ is set to the value read for pin $C_1$. The purpose of doing this as explained above is to cause the next level transition in the input data to cause a signal at point $\overline{INT}$ to go low. Next, the counter CNTRL is examined. If this counter is equal to 1, the sub-routine DECODE is called. If it is equal to 2, the sub-routine SYNCH is called, it if is equal to 4, the sub-routine PRIORITY is called and if it is equal to 5, the sub-routine POINTER is called. If the counter CNTRL is equal to or greater than 12, it is reset to 4.

After entering the sub-routine DECODE, a flag VALID DATA is examined. This flag is set in the sub-routine SYNCH during the high synchronisation pulse. If this flag is not set, a return from sub-routine is performed. If it is set, in a step $S_{10}$ a flag PENDING ERROR is examined. If this flag is set, it is reset to 0 and the flag ERROR is set. The sub-routine then continues with a step $S_{11}$ in which bit 0 is register SHIFT is examined. If this bit is equal to 0, counter ZERCTR is incremented. The counter ZERCTR counts the zeros in each set of data bits and is used for parity checking. The sub-routine then continues with a step $S_{12}$ in which a counter BIT is decremented. This counter is then examined in a step $S_{13}$ and, if it is equal to 0, this means that all eight bits and the parity bit of one set of data bits have been transmitted. If it is 0, it is reset to 9 in a step $S_{14}$ in preparation for the next set of data bits. In steps $S_{15}$ and $S_{16}$, the flag ERROR is examined and the counter ZERCTR is also examined to determine if the parity of the eight data bits is even. If the parity is even, the counter ZERCTR is set to 0 and, if the parity is odd, the flag PENDING ERROR is set and the counter ZERCTR is set to 0. Return from interrupt is then performed. If it is found in step $S_{13}$ that the counter BIT is 0, the program passes to the sub-routine TRANSLAT.

In the sub-routines TRANSLAT and FORMAT, the data bit which has just been received is stored in the matrix PEND. After entering the program TRANSLAT, the load address corresponding to the source address of the bit which has just been transmitted is obtained from the table MAP. In order to do this, the table MAP is addressed with the present value of a variable SOURCE. The variable SOURCE is set to the initial source address of the transmitting station during the program SYNCH. Then, in a step $S_{17}$ the load address is compared with the initial load address LOADDN of the next station. If it is equal to or greater than this address, the variable SOURCE is incremented and a return from sub-routine is performed. If is less than this load address, the initial load address LOADDP of the present station is subtracted from the load address of the data bit to obtain the relative load address. Then, in a step $S_{19}$ the relative data address is examined. If it is negative, a return from sub-routine is performed. If the relative load address is not negative, it means that the load address for this data bit is within the present station and so, in a step $S_{20}$, the relative load address is assigned to the data bit. The variable SOURCE is then incremented in a step $S_{21}$ in preparation for receiving the next data bit. The program flow then passes to the program FORMAT in which the data bit is loaded into the matrix PEND. A return from sub-routine is then performed.

As mentioned above, program flow passes to the sub-routine SYNCH when the counter CNTRL is found equal to 2 in the program RX. This will occur if a level transition in the optical signal does not occur at the end of a data bit or a parity bit and so will normally occur during the high synchronisation pulse or the low synchronisation. After entering this program, in a step $S_{21}$ pin $C_1$ is examined. If the high synchronisation pulse is being received, this pin will be high and so, in a step $S_{22}$, the contents of register SHIFT are examined. If the initial four zeros and the address bits have been transmitted and received correctly, the parity of these bits will be odd. If the parity is found to be odd in step $S_{22}$, a variable POINT is loaded with the address of the transmitting station and this is obtained from the register SHIFT. Then, in a step $S_{23}$, the variable SOURCE is loaded with the initial source address of the transmitting station and this address is obtained from the counter SRCTAB. Lastly, before performing a return from interrupt, counter BIT is set to 9, flag ERROR is cleared, flag VALID DATA is set, counter ZERCTR is cleared, and flag SEND is cleared. These operations are performed in preparation for receiving the data bits which follow the high synchronisation pulse. If in step $S_{22}$ it is found that the parity is even, in a step $S_{24}$ flag VALID DATA is set to 0 thereby preventing subsequent data bits from being entered into the matrix PEND.

If in step $S_{21}$ pin $C_1$ is low, this means that the low synchronisation pulse has been received and the program flow jumps to step $S_{25}$. As explained above, the last set of data bits are transmitted with odd parity and this parity is examined in step $S_{25}$. If the parity is odd, and flag ERROR is cleared, in a step $S_{26}$ the flag VALID DATA is cleared, the counter ZERCTR is set to 0, and the counter OFFSTR is set to 0. If in step $S_{25}$ it is found that the parity is even, in a step $S_{27}$ the flag ERROR is set, the flag VALID DATA is cleared, and the counter ZERCTR is set to 0. After performing step $S_{26}$ or $S_{27}$, the sub-routine OUTPUT is entered.

After entering the sub-routine OUTPUT, in a step $S_{28}$ the flag ERROR is examined. If this flag is set, the data present in matrix PEND is not reliable and so the program flow passes to the sub-routine SAVE in which the contents of matrix OUT are copied into matrix PEND. Thus, the matrix PEND is provided with the most recent set of reliable data. The program flow then passes to the beginning of program BACKGROUND. If the flag ERROR is clear, in a step $S_{29}$ row 0 of matrix PEND is copied into row 0 of matrix OUT. This data relates to outputs which are also addressed by local inputs of the station. Then, in a step $S_{30}$ these local inputs are read, the read data is complemented, and then logically OR'ed with row 0 of matrix OUT. Then, in a step $S_{31}$, row 0 of matrix OUT is loaded into the appropriate outputs of the input/output matrix. In a step $S_{32}$, the remainder of matrix PEND is loaded into the appropriate outputs of the input/output matrix and in a step $S_{33}$ the remainder of matrix PEND is copied into matrix OUT. The program flow then passes to the beginning of program BACKGROUND.

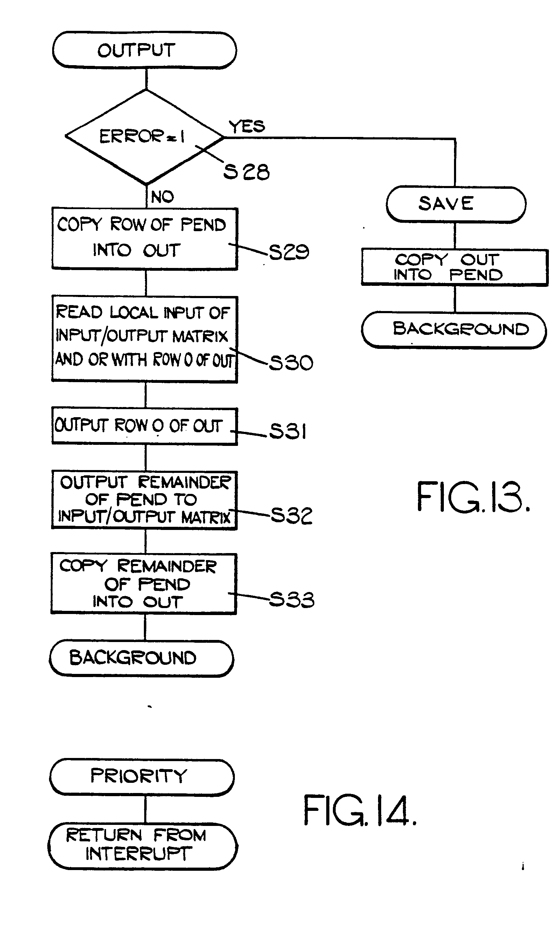

As mentioned above, the sub-routine PRIORITY is a dummy sub-routine in the present system and is illustrated as such in Figure 14.

After the low synchronisation pulse has been transmitted each station must decide if it is the next station to transmit. This decision is made in the sub-routine POINTER. After entering this sub-routine, in a step $S_{34}$ the variable POINT is incremented and this variable is then examined in a step $S_{35}$. if this variable is equal to the variable STANUM the present station will be the next station to transmit and so program flow passes to the sub-routine INITIAL. If in step $S_{35}$ it is found that the variables POINT and STANUM are not equal, in a step $S_{36}$ the initial source address corresponding to the present value of the variable POINT is obtained from the table SRCTAB. A test is then made to see if the source address is 0 in step $S_{37}$. If the address is 0, it means that the variable POINT has been incremented to a station which does not exist and so this variable is reset to 0 and the program returns to step $S_{35}$. If the variable SOURCE is not 0, a return from interrupt is performed.

If for some reason such as a detachment of the light emitting diode from its optical fibre occurs in the station which is next to transmit, the counter CNTRL will continue to be incremented during each passage through the program RX in the remaining stations. When this counter reaches a value of 12, it will be reset to the value of 4, as was explained above, and consequently .in each station a further passage will then be made through the sub-routine POINTER. Thus, in the event of transmission failure in one or more stations, the transmission sequence will move on until it reaches a station which is able to transmit.

After entering the sub-routine INITIAL, in a step $S_{38}$, the counter OFFCTR is examined. If this counter is set to a value less than 10, it is incremented in a step $S_{39}$. Then, in preparation for data transmission, the flag SEND is set, the counter BINCTR is set to 8, and the various flags used during transmission are initialized. Then, in a step $S_{40}$ and still in preparation for transmission, port C is initialized for transmission and in a step $S_{41}$ a register BUFFER is cleared. As will be explained, the data which is about to be transmitted is stored in this register. A return from interrupt is then performed.

Providing a station is operating correctly, it will never transmit more then once in succession. However, a fault may occur which causes a station to transmit continuously. For example, if the photodiode becomes detached from its optical fibre, the station will not receive the transmissions of other stations and it will never pass into the receiving mode. In the present system, each station is prevented from transmitting more than eleven times. If in step $S_{38}$ the counter OFFCTR is found to be greater than 10, it means that the station has already transmitted eleven times. In this event, in a step $S_{42}$, the counter OFFCTR is set to 11 and the flag SEND is cleared to prevent further transmissions. Then, as data may have been received incorrectly, in a step $S_{43}$ all the outputs in the input/output matrix are reset and a jump is then made to step $S_{40}$.

After entering the program TX, in a step $S_{44}$ the timer data register is set to a value which will cause a further timer interrupt after half a bit period has elapsed. Thus, timer interrupts occur each half period and as may be readily appreciated this is necessary for transmission of biphase coded data. Then, in a step $S_{45}$, a flag SEND SYNC is examined. This flag is set for transmission of one of the synchronisation pulses. If this flag is not set, the program continues with a step $S_{46}$ in which the flag ZERO TRANSITION is examined. This flag is cleared when a 0 is being transmitted to prevent level transmission halfway through the bit period. If this flag is clear, in a step $S_{47}$ it is set and the program then jumps to a step $S_{48}$. If this flag is set, in step S49, bit 7 of register BUFFER is examined. This bit represents the bit which has been currently transmitted. If this bit is 1, in a step $S_{50}$, port C of the microcomputer is complemented in order to cause a level transition and the program then continues with step $S_{48}$. If this bit is 0, in a step $S_{51}$ a counter PTYCTR is incremented. This.counter is used to count the zeros in each set of data bits and is used to determine the correct value for the parity bit. Then, in a step $S_{52}$ the flag ZERO TRANSITION is cleared in preparation for the next passage through this program. The program then jumps to step $S_{50}$.

In step $S_{48}$, a flag NEW BIT is examined. This flag is set during the first half of each bit period so as to cause a new data bit to be entered into bit 7 of register BUFFER during the subsequent passage through program TX. Thus, if the flag NEW BIT is set, in a step $S_{53}$ it is reset. Then, in a step $S_{54}$ a flag HIGH SYNC is examined. This flag is set after transmission of a high synchronisation pulse. Consequently, if this flag is cleared, the sub-routine STAMOD is called and, if it is set, the sub-routine DATMOD is called. A return from interrupt is then performed. If in step $S_{48}$ it is found that the flag NEW BIT is clear, this flag is set to 1, and, in a step $S_{55}$ the counter BINCTR is incremented. The counter BINCTR is used to count the transmission of each successive data bit. Next, in a step $S_{56}$ the direction registers are set and a return from interrupt is then performed.

After entering the sub-routine STAMOD, in a step $S_{57}$ the counter BINCTR is examined. In each transmission, during the first passage through this sub-routine this counter will have a value 8. When it does have this value, in a step $S_{58}$ the first row of the input/output matrix is read. Then, the station's own address is stored at location STANUM, the register BUFFER is loaded with the station number and parity bit obtained from table STATAB, and the next row of the input/output matrix is strobed. A return from sub-routine is then performed. During the next passage with this sub-routine, the counter BINCTR will have a value 7. In this case, in a step $S_{59}$, the load addresses of the present station and the next station are stored at locations LOADDP and LOADDN. Then, in a step $S_{60}$, using the table SRCTAB the number of inputs to the station are calculated by subtracting the initial source address of the present station from the initial source address from the next station. This value is stored at location SRCCTR. As a dummy source address is included for each station, the number stored will in fact be one greater than the number of inputs. Then, in a step $S_{61}$ the next data bit is moved into bit 7 of the register BUFFER by rotating this buffer and a return from interrupt is then performed. During the next 6 passages through this sub-routine the register buffer is rotated to put a new bit in bit 7. During the last passage, the counter BINCTR will have a value of 0 and, in a step $S_{63}$, the counter SRCCTR is examined. If this counter has a value greater than 7, in a step $S_{64}$ the counter BINCTR is set to 8, the counter PTYCTR is set to 1, and the counter DATCTR is set to 0. If the counter SRCCTR is at a value less than 8, in a step $S_{65}$ the counter SRCCTR is decremented and the counter BINCTR is then set equal to the new value of SRCCTR in a step $S_{66}$. Steps $S_{64}$, $S_{65}$ and $S_{66}$ are performed in preparation for the first passage through the sub-routine DATMOD. Following these steps, in a step $S_{67}$ the flag SEND SYNC is set in preparation for the high synchronisation pulse. Then, the flag HIGH SYNC is set and, as a precaution, the flag SEND is set. A return from sub-routine is then performed.

After entering the sub-routine DATMOND in a step $S_{68}$ the counter BINCTR is examined. If this counter is at a value greater than 0, in a step $S_{69}$ the counter DATCTR is examined. If this counter is greater than 0, in a step $S_{70}$ a new bit is loaded into bit 7 of the register BUFFER. If this counter is at 0, new data is required in preparation for transmission of the next set of data bits. Therefore, in a set of steps $S_{71}$ to $S_{73}$, the counter DATCTR is set to 8, the next row of the input/output matrix is strobed, and the complement of the data read at port A of the microcomputer is stored on the register BUFFER. Following steps $S_{70}$ to $S_{73}$, the counters SRCCTR and DATCTR are decremented before performing a return from sub-routine. If in step $S_{68}$ it is found that the counter BINCTR is set to 0, in a step $S_{74}$ the counter SRCCTR is examined to see if there are further data bits to be transmitted. If this counter is at a value greater than 0, it is examined again in a step $S_{75}$. If it is at a value equal to or greater than 8, the counter BINCTR is reset to 9 in a step $S_{76}$. If the counter SRCCTR is at a value less than 9, the counter BINCTR is set as the present value of counter SRCCTR in a step $S_{77}$ and, in a step $S_{78}$, the counter SRCCTR is decremented. Step $S_{78}$ is needed to compensate for the dummy address in each station. After performing step $S_{76}$ or steps $S_{77}$ and $S_{78}$, in a set of steps $S_{79}$ to $S_{81}$, bit 7 of register BUFFER is set to the value of bit 0 of the counter PTYCTR in preparation for transmitting the parity bit. Bit 0 of counter PTYCTR will indicate the correct parity.

If in step $S_{74}$ it is found that the counter SRCCTR is equal to 0, there are no further data bits to be transmitted and the program continues with a step $S_{82}$. In step $S_{82}$ a flag LOW SYNC is examined. If it is clear, in a step $S_{83}$ this flag is set. In a step $S_{84}$ bit 7 of the counter PTYCTR is inverted in order to provide for the odd parity bit at the end of the present set of data bits. Then in a step $S_{85}$ the counter BINCTR is incremented in order to force the program flow to pass from step $S_{68}$ to $S_{74}$ through the next passage through this sub-routine. The parity bit is then set at bit 7 of register BUFFER in steps $S_{79}$ to $S_{81}$ as before. During the next passage through this sub-routine, from step $S_{82}$ the program jumps to step $S_{85}$ in which the flag SEND is cleared. This will cause transmission to be terminated during the next passage through the program TIMER. Lastly, in a step $S_{86}$ the flag SEND SYNC is set.

**Claims**

1. An automotive multiplex system comprising a plurality of individual stations (10, 11, 12) each of which includes an optical interface (13), a set of optical guides (17, 18) each of which is connected at one end to the optical interface (13) of a respective individual station, and a passive optical mixer (19) connected to the other ends of the optical guides (17, 18) therby providing an interconnection between the individual stations (10, 11, 12), characterized in that the system further comprises a set of power lines (23) each of which is connected to the power input of a respective individual station (10, 11, 12) and is combined with its associated optical guide (17, 18) to form a ribbon cable.

2. An automotive multiplex system as claimed in claim 1, characterized in that each station (10, 11, 12) includes means for causing the stations to transmit in a predetermined order, and means for causing the next station to transmit in the event of one station failing to transmit.

3. An automotive multiplex system as claimed in claim 1 or 2, characterized in that each station (10, 11, 12) includes means for preventing the station from transmitting more than a predetermined number of times without receiving data.

4. An automotive multiplex system as claimed in claim 1, characterized in that the system includes a set of fuses (21) positioned beside the optical mixer (19), each of the set of power lines (23) being connected between the set of fuses (21) and the power input of the respective individual station (10, 11, 12).

5. An automotive multiplex system as claimed in any one of the preceding claimed, characterized in that each optical interface (13) includes optical receiving means (D1) and optical transmitting means (D2) and each optical guide (17, 18) comprises at least one optical fibre or at least one bundle of optical fibres.

6. An automotive multiplex system as claimed in claim 5, characterized in that each optical guide (17, 18) comprises a pair of optical fibres or a pair of bundles of optical fibres, one fibre or bundle (18) being associated with the receiving means (D1) and the other fibre or bundle (17) being associated with the transmitting means (D2).

7. An automotive multiplex system as claimed in any one of the preceding claims, characterized in that each station (10, 11, 12) includes means (40, 41) for processing receiving optical signals, said processing means (40, 41) being provided with hysteresis.

8. An automotive multiplex system as claimed in claim 7, characterized in that the effect of hysteresis reduces with increasing frequency.

9. An automotive multiplex system as claimed in any one of claims 1 to 6, characterized in that each station (10, 11, 12) includes means for processing received optical signals, said means comprising a first stage (40) for providing AC amplification, a second stage (41) for providing DC amplification, means (R6, R7) for providing the second stage (41) with hysteresis, and means (C3) for reducing the effect of hysteresis with increasing frequency.

10. An automotive multiplex system as claimed in claim 9, characterized in that each processing means (40, 41) includes a bias signal generator (C2) for the first stage (40), means for providing a bias signal for the second stage (41) directly from the bias signal to the first stage, the output signal of the first stage being provided to the input of the second stage without a time delay.

11. An automotive multiplex system as claimed in any one of the preceding claims, characterized in that each station (10, 11, 12) is arranged to transmit data in accordance with a predetermined format (Figures 2a), said format comprising an initial set of data bits, a synchronisation pulse, and one or more further sets of data bits.

12. An automotive multiplex system as claimed in claim 11, characterized in that said format (Figure 2a) includes a second synchronisation pulse following said one or further sets of data bits.

13. An automotive multiplex system as claimed in claim 12, characterized in that the first and second sychronisation pulses are of opposite logic levels.

14. An automotive multiplex system as claimed in any one of claims 11 to 13, characterized in that each set of data bits terminates with a partiy bit, the parity bit serving both as a check on the parity of the data in the preceding data bits and to adjust the logic level of the optical signal to the correct level for the succeeding data bits or synchronisation pulse.

15. An automotive multiplex system as claimed in any one of claims 11 to 14, characterized in that the initial data bits commence with one or more bits of predetermined data, said predetermined data being identical for each station.

16. An automotive multiplex system as claimed in claim 15, characterized in that each station (10, 11, 12) includes means for verifying the received optical signal by examining the predetermined data bits.

## Patentansprüche

1. Multiplexsystem für ein Kraftfahrzeug, mit einer Mehrzahl von Einzelstationen (10, 11, 12), die jeweils eine optische Schnittstelle (13) umfassen, einer Gruppe von Lichtleitern (17, 18), die jeweils mit einem Ende mit der optischen Schnittstelle (13) einer entsprechenden Einzelstation verbunden sind, und einem passiven optischen Mischer (19), der mit den anderen Enden der Lichtleiter (17, 18) verbunden ist, derart, daß eine Verbindung zwischen den Einzelstationen (10, 11, 12) geschaffen wird, dadurch gekennzeichnet, daß das System ferner eine Gruppe von Starkstromleitungen (23) umfaßt, die jeweils mit dem Leistungseingang einer entsprechenden Einzelstation (10, 11, 12) verbunden sind und mit dem ihnen jeweils zugehörigen Lichtleiter (17, 18) kombiniert werden, um ein Bandkabel zu bilden.

2. Multiplexsystem für ein Kraftfahrzeug gemäß Anspruch 1, dadurch gekennzeichnet, daß jede Station (10, 11, 12) Mittel, die die Stationen zu einer Übertragung in einer vorgegebenen Reihenfolge veranlassen, und Mittel, die die nächste Station zu einer Übertragung veranlassen, falls die eine Station aufgrund eines Fehlers nicht überträgt, umfaßt.

3. Multiplexsystem für ein Kraftfahrzeug gemäß Anspruch 1 oder 2, dadurch gekennzeichnet, daß jede Station (10, 11, 12) Mittel umfaßt, die verhindern, daß die Station öfter als einer vorgegebenen Anzahl entsprechend eine Übertragung ausführt, wenn sie keine Daten empfängt.

4. Multiplexsystem für eine Kraftfahrzeug gemäß Anspruch 1, dadurch gekennzeichnet, daß das System eine Gruppe von Sicherungen (21) enthält, die in der Nähe des optischen Mischers (19) angeordnet ist, wobei jede Starkstromleitung der Gruppe von Starkstromleitung (23) zwischen die Sicherungsgruppe (21) und den Leistungseingang der entsprechenden Einzelstation (10, 11, 12) geschaltet ist.

5. Multiplexsystem für ein Kraftfahrzeug gemäß einem der vorangehenden Ansprüche, dadurch gekennzeichnet, daß jede optische Schnittstelle (13) Lichtempfangsmittel (D1) und Lichtübertragungsmittel (D2) enthält und jeder Lichtleiter (17, 18) wenigstens eine Lichtleitfaser oder wenigstens ein Lichtleitfaserbündel umfaßt.

6. Multiplexsystem für ein Kraftfahrzeug gemäß Anspruch 5, dadurch gekennzeichnet, daß jeder Lichtleiter (17, 18) ein Paar von Lichtleitfasern oder ein Paar von Lichtleitfaserbündeln umfaßt, wobei eine Faser oder ein Bündel (18) den Empfangsmitteln (D1) und die andere Faser oder das andere Bündel (17) den Übertragungsmitteln (D2) zugeordnet ist.

7. Multiplexsystem für ein Kraftfahrzeug gemäß einem der vorangehenden Ansprüche, dadurch gekennzeichnet, daß jede Station (10, 11, 12) Mittel (40, 41) zum Verarbeiten der empfangenen Lichtsignale umfaßt, wobei die Verarbeitungsmittel (40, 41) mit einer Hysterese versehen sind.

8. Multiplexsystem für ein Kraftfahrzeug gemäß Anspruch 7, dadurch gekennzeichnet, daß die Wirkung der Hysterese mit zunehmender Frequenz abnimmt.

9. Multiplexsystem für ein Kraftfahrzeug gemäß einem der Ansprüche 1 bis 6, dadurch gekennzeichnet, daß jede station (10, 11, 12) Mittel zum Verarbeiten empfangener Lichtsignale enthält, wobei die Mittel eine erste Stufe (40), die eine Wechselstrom-Verstärkung schafft, eine zweite Stufe (41), die eine Gleichstrom-Verstärkung schafft, Mittel (R6, R7), die die zweite Stufe (41) mit einer Hysterese versehen, und Mittel (C3), die die Wirkung der Hysterese mit zunehmender Frequenz verringern, umfassen.

10. Multiplexsystem für ein Kraftfahrzeug gemäß Anspruch 9, dadurch gekennzeichnet, daß jedes Verarbeitungsmittel (40, 41) einen Vorspannungssignal-Generator (C2) für die erste Stufe (40) und Mittel, die aus dem Vorspannungssignal für die erste Stufe direkt ein Vorspannungssignal für die zweite Stufe (41) schaffen, enthält, wobei das Ausgangssignal der ersten Stufe am Eingang der zweiten Stufe ohne Zeitverzögerung bereitgestellt wird.

11. Multiplexsystem für ein Kraftfahrzeug gemäß einem der vorangehenden Ansprüche, dadurch gekennzeichnet, daß jede Station (10, 11, 12) so angeordnet ist, daß sie Daten entsprechend einem vorgegebenen Format (Fig. 2a) überträgt, wobei das Format einen Anfangssatz von Datenbits, einen Synchronisationsimpuls und einen oder mehrere weitere Sätze von Datenbits umfaßt.

12. Multiplexsystem für ein Kraftfahrzeug gemäß Anspruch 11, dadurch gekennzeichnet, daß das Format (Fig. 2a) einen zweiten Synchronisationsimpuls enthält, der dem einen oder den mehreren Sätzen von Datenbits folgt.

13. Multiplexsystem für ein Kraftfahrzeug gemäß Anspruch 12 dadurch gekennzeichnet, daß der erste und der zweite Synchronisationsimpuls entgegengesetzte Logikpegel besitzen.

14. Multiplexsystem für ein Kraftfahrzeug gemäß einem der Ansprüche 11 bis 13, dadurch gekennzeichnet, daß jeder Satz von Datenbits mit einem Paritätsbit endet, welches sowohl der Paritätsprüfung der Daten der vorangehenden Datenbits als auch der Einstellung des Logikpegels des Lichtsignals auf den richtigen Pegel für die nachfolgenden Datenbits oder den Synchronisationsimpuls dient.

15. Multiplexsystem für ein Kraftfahrzeug gemäß einem der Ansprüche 11 bis 14, dadurch gekennzeichnet, daß die Anfangsdatenbits mit einem oder mehreren Bits von vorgegebenen Daten beginnen, wobei die vorgegebenen Daten für jede Station identisch sind.

16. Multiplexsystem für ein Kraftfahrzeug gemäß Anspruch 15, dadurch gekennzeichnet, daß jede Station (10, 11, 12) Mittel enthält, mit denen das empfangene Lichtsignal durch Untersuchung der vorgegebenen Datenbits verifiziert wird.

**Revendications**

1. Dispositif de multiplexage pour automobile comprenant une pluralité de stations individuelles (10, 11, 12), chacune de ces stations présentant une interface optique (13), un ensemble de guides optiques (17, 18) étant chacun connectés à une extrémité de l'interface optique (13) d'une station individuelle correspondante, et un mélangeur optique passif (19) relié aux autres extrémités des guides optiques (17, 18), ce qui permet une interconnexion des stations individuelles (10, 11, 12) entre elles, caractérisé en ce que le système comprend en outre un ensemble de lignes d'alimentation (23), chacune de ces lignes étant reliée à la source d'alimentation d'une station individuelle correspondante (10, 11, 12) et étant combinée avec son guide optique associé (17, 18) pour former un câble-ruban.

2. Dispositif de multiplexage pour automobile selon la revendication 1, caractérisé en ce que chaque station (10, 11, 12) comporte des moyens qui permettent aux stations d'émettre dans un ordre prédéterminé, et des moyens qui permettent de faire effectuer l'émission par une station suivante en cas de défaillance d'émission par une station.

3. Dispositif de multiplexage pour automobile selon la revendication 1 ou 2, caractérisé en ce que chaque station (10, 11, 12) comprend des moyens pour empêcher la station d'émettre plus d'un nombre de fois prédéterminé sans recevoir de données.

4. Dispositif de multiplexage pour automobile selon la revendication 1, caractérisé en ce que le dispositif comprend un ensemble de fusibles (21) positionnés derrière le mélangeur optique (19), chacune des lignes de l'ensemble de lignes d'alimentation (23) assurant la liaison entre l'ensemble de fusibles (21) et la source d'alimentation de chaque station individuelle correspondante (10, 11, 12).

5. Dispositif de multiplexage pour automobile selon l'une des revendications précédentes, caractérisé en ce que chaque interface optique (13) comprend des moyens pour la réception optique (D1) et des moyens pour l'émission optique (D2) et en ce que chaque guide optique (17, 18) comprend au moins une fibre optique ou au moins un faisceau de fibres optiques.

6. Dispositif de multiplexage pour automobile selon la revendication 5, caractérisé en ce que chaque guide optique (17, 18) comprend une paire de fibres optiques ou une paire de faisceaux de fibres optiques, une fibre ou un faisceau (18) étant associé au moyen de réception (D1) et l'autre fibre ou faisceau (17) étant associé au moyen d'émission (D2).

7. Dispositif de multiplexage pour automobile selon l'une des revendications précédentes, caractérisé en ce que chaque station (10, 11, 12) comprend des moyens (40, 41) pour traiter les signaux optiques reçus, lesdits moyens de traitement (40, 41) présentant une hystérésis.

8. Dispositif de multiplexage pour automobile selon la revendication 7, caractérisé en ce que l'effet d'hystérésis diminue lorsque la fréquence augmente.

9. Dispositif de multiplexage pour automobile selon l'une des revendications 1 à 6, caractérisé en ce que chaque station (10, 11, 12) comprend des moyens pour le traitement desdits signaux optiques reçus, lesdits moyens comprenant un premier étage (40) permettant une amplification du courant en alternatif, un deuxième étage (41) permettant une amplification du courant continu, des moyens (R6, R7) permettant un effet d'hystérésis dans le deuxième étage (41), et des moyens (C3) réduisant l'effet d'hystérésis en fonction de l'augmentation de la fréquence.

10. Dispositif de multiplexage pour automobile selon la revendication 9, caractérisé en ce que chaque moyen de traitement (40, 41) comprend un générateur de signaux de polarisation (C2) pour le premier étage (40), des moyens pour émettre un signal de polarisation pour le deuxième étage (41) directement à partir du signal de polarisation pour le premier étage, le signal en sortie du premier étage étant injecté à l'entrée duy deuxième étage sans perte de temps.

11. Dispositif de multiplexage pour automobile selon l'une des revendications précédentes, caractérisé en ce que chaque station (10, 11, 12) est prévue pour transmettre des données en fonction d'un format prédéterminé (figure 2a) ledit format comprenant une ensemble initial de bits de données, une impulsion de synchronisation et un ou plusieurs ensembles supplémentaires de bits de données.

12. Dispositif de multiplexage pour automobile selon la revendication 11, caractérisé en ce que ledit format (figure 2a) comprend une deuxième impulsion de synchronisation suivant le ou lesdits ensembles supplémentaires de bits de données.

13. Dispositif de multiplexage pour automobile selon la revendication 12, caractérisé en ce que les première et deuxième impulsions de synchronisation ont des niveaux de logique opposés.

14. Dispositif de multiplexage pour automobile selon l'une des revendications 11 à 13, caractérisé en ce que chaque ensemble de bits de données s'achève par un bit, de parité, le bit de parité servant à la fois à vérifier la parité des données dans les bits de données qui le précèdent et à régler le niveau de logique du signal optique au niveau correct pour les bits de données suivants ou pour l'impulsion de synchronisation.

15. Dispositif de multiplexage pour automobile selon l'une des revendications 11 à 14, caractérisé en ce que les bits de données initiaux commencent par un ou plusieurs bits de données prédéterminées, lesdites données prédéterminées étant identiques pour chaque station.

16. Dispositif de multiplexage pour automobile selon la revendication 15, caractérisé en ce que chaque station (10, 11, 12) comprend des moyens pour vérifier le signal optique reçu en examinant les bits de données prédéterminées.

FIG. I.

EP 0 131 450 B1

Z Z Z Z A A A P S D D D D D D D D P - - - - - D D P S

|4 ZEROS| ADDRESS BITS | | 8 DATA BITS | | DATA | LOW SYNCH

ODD PARITY    HIGH SYNCH PULSE    ODD PARITY    EVEN PARITY

## FIG.2a

| Z | Z | Z | Z | A | A | A | A | P | S | D

| O | O | O | O | O | O | I | O | I | S |

T T T

T = BIT PERIOD = 240μS

## FIG.2b

| S | D | D | D | D | D | D | D | D | P | D |

| I | I | I | O | I | O | I | O | I | O |

## FIG.2c

| P | D | D | D | D | D | P | S

| I | I | I | O | I | O | O |

## FIG.2d

FIG.3.

EP 0 131 450 B1

FIG.4.

```
┌─────────┐   ┌────────────┐        ┌──────────┐        ┌──────────┐
│   HWI   │   │ BACKGROUND │        │  TIMER   │        │  RESET   │
└─────────┘   └────────────┘        └────┬─────┘        └──────────┘
                                         │
                                    ┌────┴──────────────┐
                                    │                   │
                               ┌────┴─────┐        ┌─────┴────┐
                               │    RX    │        │    TX    │
                               └────┬─────┘        └────┬─────┘
                                    │                   │
         ┌──────────┬───────────────┼───────────┐       │
    ┌────┴───┐  ┌───┴────┐  ┌────────┴──┐  ┌─────┴─────┐ │    ┌──────┬──────┐
    │ DECODE │  │ SYNCH  │  │ PRIORITY  │  │  POINTER  │      │STATUS│DATMON│
    └────┬───┘  └───┬────┘  └───────────┘  └─────┬─────┘      └──────┴──────┘
         │          │                            │
    ┌────┴─────┐ ┌──┴─────┐               ┌───────┴───┐
    │ TRANSLAT │ │ OUTPUT │               │  INITIAL  │
    └────┬─────┘ └──┬─────┘               └───────────┘
         │          │
    ┌────┴────┐ ┌───┴────┐
    │ FORMAT  │ │  SAVE  │
    └─────────┘ └────────┘
```

# FIG.5.

RESET

INITIALIZE DIRECTION
REGISTERS — S1

READ STATION
IDENTITY
AND STORE
AT STANUM

READ INITIAL LOAD
ADDRESS OF OWN
STATION AND STORE
AT LOAD DP

READ INITIAL LOAD
ADDRESS OF NEXT
STATION AND STORE
AT LOADDN

CLEAR TIMER
INTERRUPT
MASK

OFFCTR = O
OUT = O
PEND = O — S2

BACKGROUND

FIG.6.

BACKGROUND

CLEAR TIMER INTERRUPT
MASK AND HARDWARE
INTERRUPT MASK AND
RESET STACK POINTER

FIG.7.

6

FIG.8.

FIG.9a.

FIG.9b.

```
                    ┌──────────────┐
                    │   DECODE     │
                    └──────┬───────┘
                           │
                        ◇ VALID ◇        NO
                        ◇ DATA  ◇ ─────────────────────────────┐
                        ◇  = 1  ◇                               │
                           │ YES                                │
                           │                                    │
                      ◇ PENDING ◇    NO                         │
                      ◇ ERROR   ◇ ───────────┐                  │
                      ◇  = 0    ◇             │                  │
                        │ S10                 │                  │
                        │ YES          ┌──────────────────┐      │
                        │              │ PENDING ERROR = 0 │     │
                        │              │  ERROR = 1        │     │
                        │              └──────────────────┘      │
                        │                                        │
                     ◇ SHIFT ◇      NO                           │
                     ◇ BIT 0 ◇ ──────────┐                       │
                     ◇  = 1  ◇           │                       │
                       │ S11             │                       │
                       │ YES     ┌──────────────────┐            │
                       │         │ ZERCTR = ZERCTR+1 │           │
                       │         └──────────────────┘            │
                  ┌──────────────┐                               │
                  │ BIT = BIT -1 │── S12                         │
                  └──────┬───────┘                               │
                         │                                       │
                    ◇ BIT = 0 ◇   YES                            │
                    ◇         ◇ ──────── ┌──────────┐            │
                    ◇  S13    ◇          │ BIT = 9  │── S14      │
                       │ NO              └────┬─────┘            │
                  ┌──────────────┐            │                 │
                  │  TRANSLAT    │       ◇ ERROR=1 ◇  NO         │
                  └──────────────┘       ◇   OR    ◇ ── ┌──────────┐
                                         ◇PARITY ODD◇    │ZERCTR = 0│
                                           │  S15        └──────────┘
                                           │ YES                │
                                      ◇ PARITY ODD ◇  NO        │
                                      ◇            ◇ ── ┌──────────┐
                                         │ S16            │ZERCTR = 0│
                                         │ YES            └──────────┘
                              ┌────────────────────┐   ┌──────────────┐
                              │ PENDING ERROR = 1  │   │ RETURN FROM  │
                              │ ZERCTR = 0         │   │ SUB - ROUTINE│
                              └────────────────────┘   └──────────────┘
```

FIG.10.

FIG.11.

FIG.12.

OUTPUT

ERROR = 1    YES

S 28

NO

COPY ROW OF PEND
INTO OUT    S29

READ LOCAL INPUT OF
INPUT/OUTPUT MATRIX
AND OR WITH ROW 0 OF OUT    S30

OUTPUT ROW 0 OF OUT    S31

OUTPUT REMAINDER
OF PEND TO
INPUT/OUTPUT MATRIX    S32

COPY REMAINDER
OF PEND
INTO OUT    S33

BACKGROUND

SAVE

COPY OUT
INTO PEND

BACKGROUND

FIG.13.

PRIORITY

RETURN FROM
INTERRUPT

FIG.14.

13

FIG.15.

FIG.16.

FIG. 17.

FIG.18.

FIG.19a.

FIG. 19b.